# EUROPÄISCHE PATENTSCHRIFT

(11) **EP 1 013 986 B1**
(45) Veröffentlichungstag und Bekanntmachung des Hinweises auf die Patenterteilung: **15.08.2007**
(21) Anmeldenummer: 99125257.8
(22) Anmeldetag: 17.12.1999
(51) Int. Cl.: F17C 13/04, G05D 16/06

(54) **Gasflaschenarmatur**
Gas bottle fitting
Robinetterie de bouteille à gaz

(30) Priorität: 18.12.1998 DE 19858746; 19.03.1999 DE 19912489; 08.04.1999 EP 99106956
(43) Veröffentlichungstag der Anmeldung: 28.06.2000
(73) Patentinhaber: Linde AG, 65189 Wiesbaden (DE)
(72) Erfinder: Meinass, Helmut, Dipl.-Ing., 82538 Geretsried (DE); Mair, Herman, Dipl.-Ing., 81547 München (DE)
(74) Vertreter: Gellner, Bernd

(56) Entgegenhaltungen:
- EP-A- 0 275 242
- EP-A- 0 845 729
- FR-A- 2 399 610
- FR-A- 2 507 574
- FR-A- 2 734 341

## Beschreibung

Die Erfindung betrifft eine Gasflaschenarmatur mit für den Benutzer vorgesehenen Bedien- und Anzeigeelementen, die zumindest ein Betätigungselement für eine Flaschenverschlußeinrichtung, einen Einstellknopf für einen Druckminderer und einen Gasentnahmeanschluß umfassen, wobei alle für den Benutzer vorgesehenen Bedien-und Anzeigeelemente innerhalb eines zylindrischen Sektors angeordnet sind, sowie eine Gasflasche mit einer derartigen Armatur.

Aus der EP-A-0 747 796 ist eine kompakte Gasflaschenarmatur, umfassend eine Flaschenverschlußeinrichtung, einen Druckminderer und Manometer, bekannt. Die gesamte Armatur ist von einer Schutzverkleidung umgeben, die mehrere Zugangsöffnungen aufweist, so daß die verschiedenen Bedienelemente zugänglich und die Anzeigeelemente, beispielsweise die Druckanzeigen, ablesbar sind. Die Gasflasche ist dadurch stets gegen Beschädigungen geschützt und dennoch sofort betriebsbereit.

Der Anschlußstutzen für die Gasentnahme, die Manometer und der Regulierknopf für den Druckminderer sind jedoch aus Platzgründen jeweils um 90° versetzt angeordnet. Diese Konfiguration hat den Nachteil, daß der Benutzer der Gasflasche nicht alle Bedien- und Anzeigeelemente von einer Position aus einsehen bzw. bedienen kann. Insbesondere wenn die Gasflasche in einer Palette oder in einer Reihe mit einer oder mehreren anderen Flaschen steht, wird dadurch der Bedienkomfort eingeschränkt.

Das Dokument FR-A-2 399 610 offenbart eine Gasflaschenarmatur mit für den Benutzer vorgesehenen Bedien- und Anzeigeelementen, welche innerhalb eines zylindrischen Sektors angeordnet sind.

Aufgabe vorliegender Erfindung ist es daher, eine Gasflaschenarmatur der eingangs genannten Art so zu verbessern, daß die Bedienung der Gasflaschenarmatur erleichtert wird. Ferner soll eine Gasflasche mit einer derartigen Armatur entwickelt werden, die neben der erleichterten Bedienbarkeit der Armatur einen zuverlässigen Schutz gegen Beschädigungen der Armatur bietet.

Diese Aufgabe wird hinsichtlich der Gasflaschenarmatur erfindungsgemäß dadurch gelöst, daß die Zylinderachse des zylindrischen Sektors in der Flaschenachse liegt und dass dessen Öffnungswinkel nicht mehr als 150°, bevorzugt nicht mehr als 120°, besonders bevorzugt nicht mehr als 90°, beträgt und dass ein Füllanschluß zum Füllen der Gasflasche vorgesehen ist, wobei die Anschlußöffnung des Füllanschlusses in einer Ebene senkrecht zur Flaschenachse liegt.

Stehen mehrere Gasflaschen in einer Reihe unmittelbar nebeneinander, so beträgt der von der Flaschenachse aus gemessene frei einsehbare Öffnungswinkel 120°. Bevorzugt werden daher alle Bedien- und Anzeigeelemente, die der Benutzer der Gasflasche benötigt, innerhalb dieses Zylindersektors angeordnet. Der Benutzer hat so, ohne die Flasche zu drehen oder seine Position zu wechseln, zu allen für ihn relevanten Bedien- und Anzeigeelementen Zugang.

Als Benutzer ist im Sinne der Erfindung derjenige zu verstehen, der das in der Gasflasche befindliche Gas nutzen, d.h. entnehmen will. Unter die für den Benutzer vorgesehenen Bedien- und Anzeigeelemente fallen die Teile von allen für die Gasentnahme benötigten Elementen, die der Benutzer entweder direkt bewegt, berührt, anderweitig bedient, mit denen er in Kontakt kommt oder die er einsieht Zu den Bedienelementen gehören also z.B. Drehknöpfe, Hebel, Schalter und ähnliches, zu den Anzeigeelementen beispielsweise Zeiger, Skalen oder Displays. Die Gehäuse, in denen sich diese Bedien- oder Anzeigeelemente befinden, oder andere mit den Bedien- oder Anzeigeelementen verbundene Teile, die der Benutzer nicht direkt bedient oder ansieht, sowie etwaige Zusatzvorrichtungen, die beispielsweise nur beim Befüllen der Gasflasche Anwendung finden, müssen dagegen nicht zwingend innerhalb des erfindungsgemäßen Zylindersektors angeordnet sein.

Es wurde im Rahmen der Erfindung festgestellt, daß Anzeigeelemente, die sich in einem Winkelbereich bis zu 150° befinden, gut ablesbar sind. Bevorzugt werden diese jedoch innerhalb eines Sektors mit einem Öffnungswinkel von bis zu 120°, besonders bevorzugt von bis zu 90°, angeordnet.

Die Bedien- und Anzeigeelemente umfassen vorzugsweise ein Betätigungselement für eine Flaschenverschlußeinrichtung, einen Einstellknopf für einen Druckminderer, einen Gasentnahmeanschluß, eine Druckanzeigevorrichtung für den Flaschendruck und eine Druckanzeigevorrichtung für den Verbrauchsdruck. Die Flaschenverschlußeinrichtung und der Druckminderer können selbstverständlich auch mit einem Hebel, Schalter oder ähnlichem betätigt bzw. eingestellt werden.

Der Füllanschluß zum Füllen der Gasflasche ist so angeordnet, daß die Anschlußöffnung des Füllanschlusses in einer Ebene senkrecht zur Flaschenachse liegt. Vorzugsweise befindet sich die Öffnung des Füllanschlusses auf der Oberseite der Gasflaschenarmatur. Die Richtungsangabe "oben" bezieht sich hierbei auf eine Gasflaschenarmatur, die auf einer stehenden Gasflasche montiert ist. Die Gasflaschen können so, auch wenn sie dicht an dicht in Paletten stehen, leicht befüllt werden. Eine Herausnahme der Gasflaschen aus den Paletten ist nicht notwendig. Das Befüllen der Flaschen wird dadurch schneller und billiger.

Es hat sich als günstig erwiesen, die Flaschenverschlußeinrichtung und eine Vorrichtung zur Druckminderung in einem Element zu kombinieren. Diese Integration stellt eine preiswerte Lösung für die beiden Funktionen "Verschließen bzw. Öffnen der Flasche" und "Vorminderung des Druckes" dar. Die gesamte Gasflaschenarmatur erhält damit eine zweistufige Druckreduzierung. Zunächst wird der Gasflaschendruck mit der in der Flaschenverschlußeinrichtung integrierten Vorrichtung zur Druckminderung reduziert, anschließend mit dem Druckminderer auf den von dem an dem Gasentnahmeanschluß angeschlossenen Verbraucher geforderten Verbrauchsdruck verringert. Der Verbrauchsdruck kann somit genauer geregelt werden und ist vom momentanen Flaschendruck im wesentlichen unabhängig.

Mit der integrierten Vorrichtung zur Druckminderung wird vorzugsweise eine Druckerniedrigung auf 10 bis 40 bar, besonders bevorzugt auf 20 bis 30 bar, erreicht.

Der Betätigungswinkel des Betätigungselementes der Flaschenverschlußeinrichtung beträgt von Vorteil nicht mehr als 270°, bevorzugt nicht mehr als 180°, besonders bevorzugt nicht mehr als 150°. Der geringe Betätigungswinkel ermöglicht ein schnelles Öffnen und Schließen der Flaschenverschlußeinrichtung. Dadurch werden sowohl der Bedienkomfort als auch die Sicherheit des Gesamtsystems erhöht. Im Gefahrenfall kann die Flasche mir einem schnellen Handgriff verschlossen werden.

Vorzugsweise rastet das Betätigungselement der Flaschenverschlußeinrichtung in seinen Endpositionen "Flasche offen" und "Flasche geschlossen" ein.

Sowohl aus Platzgründen als auch aus ergonomischer Sicht hat sich ein Drehknopf zur Betätigung der Flaschenverschlußeinrichtung als günstig erwiesen.

Die Erfindung bezieht sich auch auf eine Gasflasche mit der erfindungsgemäßen Flaschenarmatur, die eine Schutzkappe für die Gasflaschenarmatur aufweist, die zumindest eine, vorzugsweise genau eine Zugangsöffnung für die für den Verbraucher vorgesehenen Bedien- und Anzeigeelemente besitzt. Alle für den Verbraucher vorgesehenen Bedien- und Anzeigeelemente sind durch die Zugangsöffnung bzw. durch die Zugangsöffnungen zugänglich.

Vorzugsweise ist genau eine Zugangsöffnung vorgesehen, durch die alle Bedien- und Anzeigeelemente erreicht und eingesehen werden können. Es kann aber, wenn die einzelnen Elemente weit genug auseinander liegen, auch günstig sein, mehrere Zugangsöffnungen, z.B. zwei übereinander angeordnete Öffnungen, vorzusehen. Es ist jedoch immer darauf zu achten, daß die Bedien- und Anzeigeelemente von einer Position aus bedient werden können.

Die Schutzkappe bietet einen wirkungsvollen Schutz gegen Beschädigungen der Gasflaschenarmatur beim Transport oder beim Einsatz der Flasche. Die Zugangsöffnung bzw. die Zugangsöffnungen sind so ausgeführt, daß alle Bedien- und Anzeigeelemente von außen leicht zugänglich sind, ohne daß die Schutzkappe entfernt werden muß. Beim Transport kann die gesamte Gasflaschenarmatur an der Flasche verbleiben, so daß der Kunde die Flasche sofort nach der Anlieferung einsetzen kann, ohne erst Ventile, Druckminderer oder Manometer montieren zu müssen. Vorzugsweise ist die Schutzkappe zwar fest mit dem Flaschenhals der Gasflasche verbunden, jedoch demontierbar, beispielsweise durch eine Schraubverbindung.

Es hat sich gezeigt, daß es günstig ist, wenn die Schutzkappe nach oben geschlossen ist und/oder am Boden eine Abflußöffnung aufweist. Die Schutzkappe dient so zusätzlich als Witterungsschutz und eventuell eingedrungenes Regenwasser kann durch die Abflußöffnung ablaufen. Die Schutzkappe wird vorteilhaft aus Kunststoff gefertigt.

Aus herstellungstechnischen Gründen besteht die Schutzkappe von Vorteil aus einem Unter- und einem Oberteil, wobei das Unterteil nach oben und das Oberteil nach unten keine Hinterschneidung aufweisen. Die beiden Teile sind dadurch leicht herstellbar, z.B. durch Spitzgießen aus Kunststoff. Ferner wird so eine einfache Montage der Gasflaschenarmaturen und der Schutzkappe gewährleistet.

Der Transport der Gasflasche wird vorzugsweise dadurch erleichtert, daß die Schutzkappe eine als Tragegriff geeignete Aussparung und/oder das Oberteil der Schutzkappe einen Knauf besitzen.

Die Erfindung eignet sich insbesondere für 20- oder 50 I-Gasflaschen für Acetylen, Sauerstoff oder Schweißschutzgase und für Gasflaschen mit einem Fülldruck von 200 oder 300 bar. Die hohe Zugänglichkeit aller Bedien- und Ableseinstrumente ist vor allem nach dem Einbau von zwei Flaschen in einen Flaschenwagen vorteilhaft. Bei der Bedienung einer der Flaschen stört so die unmittelbar daneben stehende Flasche nicht. Ein Umschalten von einer Flasche auf die andere ist schnell möglich.

Vorzugsweise ist die Schutzkappe so ausgeführt, daß die Druckanzeigevorrichtungen, der Druckminderer und/oder die Flaschenverschlußeinrichtung ohne Demontage der Schutzkappe ausgewechselt werden können.

Die Erfindung sowie weitere Einzelheiten der Erfindung werden im folgenden anhand von in den Zeichnungen dargestellten Ausführungsbeispielen näher erläutert. Hierbei zeigen:
- Figur 1: schematisch zwei nebeneinander stehende Gasflaschen in der Vorderansicht und
- Figur 2: in der Draufsicht,
- Figur 3: eine Ausführungsform der erfindungsgemäßen Gasflaschenarmatur,
- Figur 4: einen Schnitt entlang der Linie A-B-C-D-E-F in Figur 3,
- Figur 5: einen Schnitt entlang der Linie G-H in Figur 3,
- Figur 6: einen Schnitt entlang der Linie I-J in Figur 3,
- Figur 7: einen Schnitt entlang der Linie K-L in Figur 3,
- Figur 8: eine alternative Ausführungsform,
- Figur 9: einen Schnitt entlang der Linie K-L-M in Figur 8,
- Figur 10: eine erfindungsgemäße Schutzkappe in der Seitenansicht,
- Figur 11: in der Vorderansicht und
- Figur 12: in der Draufsicht.

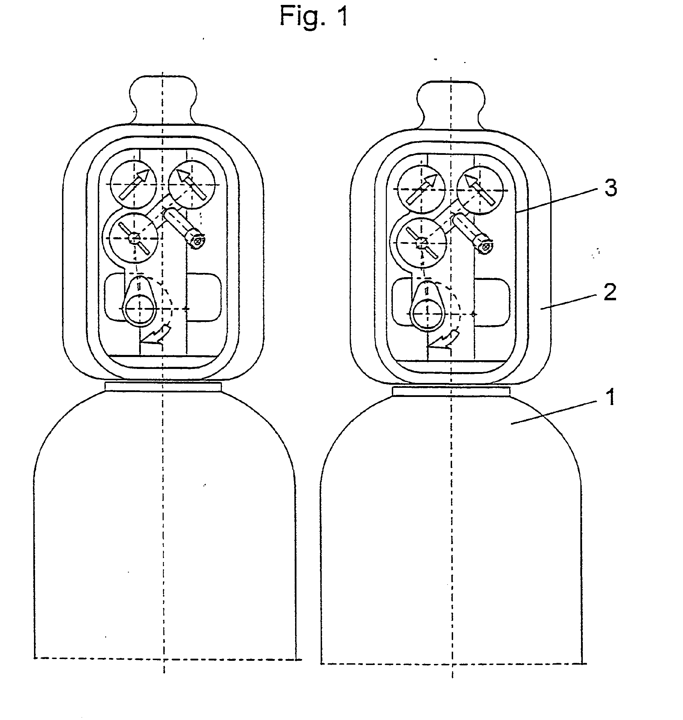

Beispielsweise beim Schweißen werden am Verbrauchsort des Gases häufig nicht nur eine, sondern zwei oder mehrere Gasflaschen bereitgestellt, um den Gasverbraucher nach der Entleerung der ersten Gasflasche schnell mittels einer zweiten Flasche versorgen zu können. In Figur 1 sind zwei solche nebeneinander stehende Gasflaschen 1, die sich beispielsweise in einem Flaschenwagen befinden, gezeigt. Erfindungsgemäß werden die auf dem Kopf der Gasflaschen 1 angebrachten Armaturen durch eine Schutzkappe 2 gegen Beschädigungen geschützt. Die Armaturen und die Schutzkappe 2 werden im folgenden noch näher erläutert.

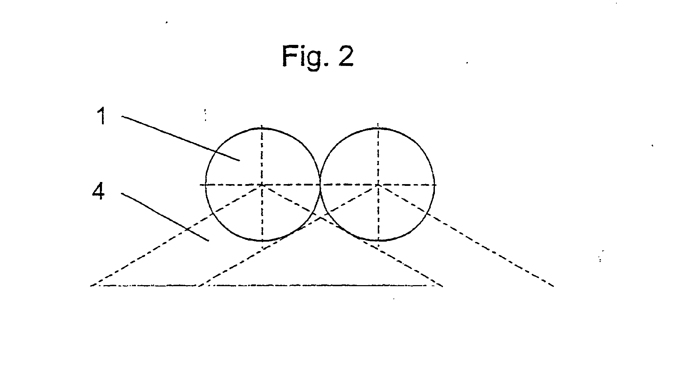

Die Schutzkappen 2 weisen jeweils ein Zugangsfenster 3 auf, durch welches ohne Entfernung der Schutzkappe 2 sämtliche für den Verbraucher relevanten Bedien- und Anzeigeelemente der Armatur zugänglich und einsehbar sind. Aus Figur 2 ist ersichtlich, daß der bestmögliche Zugang zu allen Bedien- und Anzeigeelementen dann erzielt wird, wenn diese innerhalb des mit der Gasflasche 1 koaxial angeordneten Zylindersektors 4 liegen. Die Bedien- und Anzeigeelemente sind daher alle innerhalb eines Winkelbereichs 4 von 120 ° angeordnet. Auf diese Weise sind alle Bedienelemente beider Gasflaschen 1 leicht zugänglich und ein Wechsel von einer Gasflasche zur nächsten ist schnell möglich.

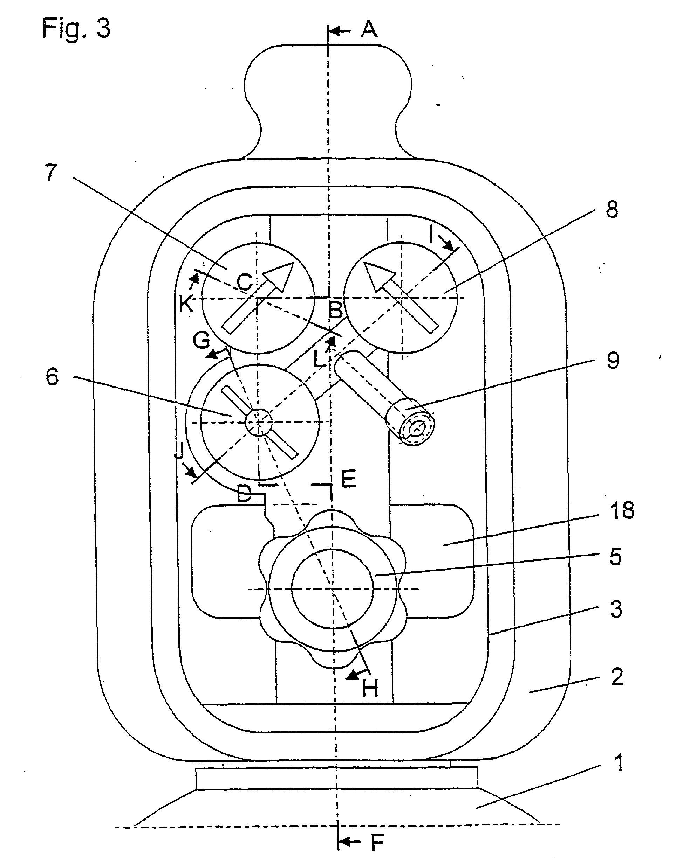

In Figur 3 ist eine Ausführungsform der erfindungsgemäßen Gasflaschenarmatur in der Vorderansicht dargestellt. Die auf die Gasflasche 1 aufgeschraubte Armatur besteht unter anderem aus einer Flaschenverschlußeinrichtung mit einem Drehknopf 5, einem Einstellknopf 6 für einen Druckminderer, einem Manometer 7 für den Druck in der Gasflasche 1 und einem Manometer 8 für den an dem Gasentnahmeanschluß 9 anstehenden Verbrauchsdruck.

Die gesamte Armatur ist von einer Schutzkappe 2 mit einer Zugangsöffnung 3 umgeben. Die Öffnung 3 erstreckt sich in axialer Richtung, d.h. entlang der Linie A-F, soweit, daß alle Bedien- und Anzeigeelemente 5 bis 9 leicht betätigt und abgelesen werden können. Auf ihrer Rückseite besitzt die Schutzkappe 2 eine Aussparung 18, die als Tragegriff für die Gasflasche 1 dienen kann. Der Aufbau der Gasflaschenarmatur soll anhand der Figuren 3 bis 7 näher erläutert werden.

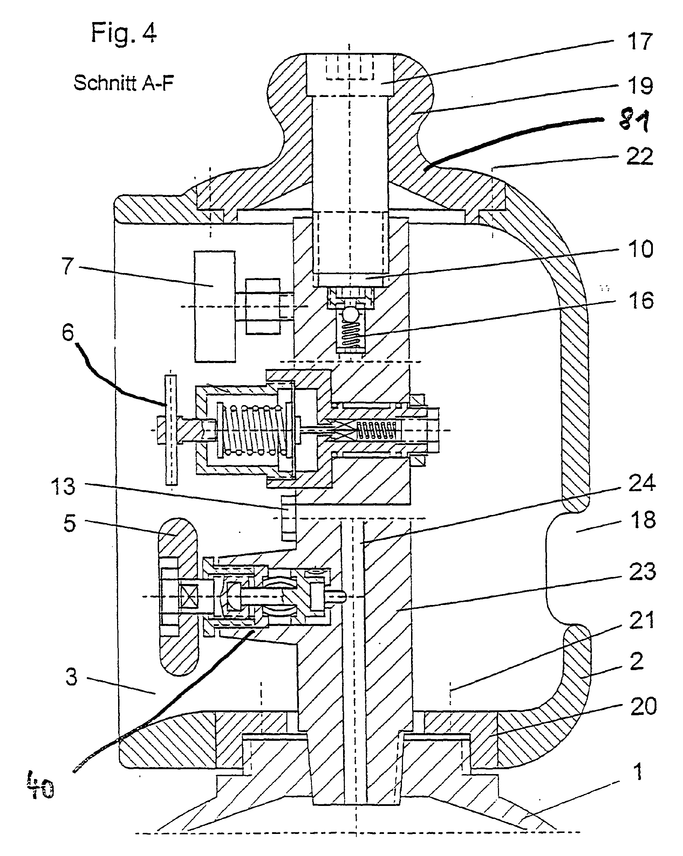

Figur 4 zeigt einen Schnitt durch Figur 1 entlang der Linie A-B-C-D-E-F. In den Boden der Schutzkappe 2 ist ein metallischer Verstärkungsring 20 mit einem Gewinde integriert, so daß die Schutzkappe 2 auf die Gasflasche 1 aufgeschraubt werden kann. Der Verstärkungsring 20 besitzt bevorzugt eine höhere Festigkeit als die Schutzkappe 2. Die Schutzkappe 2 wird in eine solche Position auf der Flasche 1 gebracht, daß sich die Zugangsöffnung 3 zentral vor den Bedien- und Anzeigeelementen 5 bis 9 befindet, und durch die Arretierschrauben 21 gegen unbeabsichtigtes Lösen oder Verdrehen gesichert. Der Deckel 81 der Schutzkappe 2 besitzt einen aufgesetzten Knauf 19, an dem die Gasflasche 1 gehalten oder beispielsweise gerollt werden kann.

Der Ventilkörper 23 ist gasdicht in die Flasche 1 geschraubt. Durch den Ventilkörper 23 verläuft entlang der Flaschenachse eine zentrale Bohrung 24, mit der die Flaschenverschlußeinrichtung 40 und das Manometer 7 in Verbindung stehen. Die Bohrung 24 wird in ihrem oberen Bereich durch ein Sicherungsventil 16 abgeschlossen, welches ein unerwünschtes Entweichen von Gas aus der Flasche 1 verhindert.

Durch den Knauf 19 verläuft eine Zentralbohrung, die sich von oben bis zum Sicherungsventil 16 erstreckt. Im normalen Betrieb wird diese Bohrung durch einen eingeschraubten Verschlußstopfen 17 verschlossen. Zum Füllen der Gasflasche 1 wird der Verschlußstopfen 17 entfernt und ein Füllstutzen in den Füllanschluß 10 eingeschraubt. Das Sicherungsventil 16 öffnet, sobald der am Füllanschluß 10 anstehende Druck den Flaschendruck und den Federdruck des Ventils 16 übersteigt und erlaubt so ein einfaches Befüllen der Flasche 1 von oben, ohne daß die Schutzkappe 2 oder die Flaschenarmaturen von der Gasflasche 1 entfernt werden müßten.

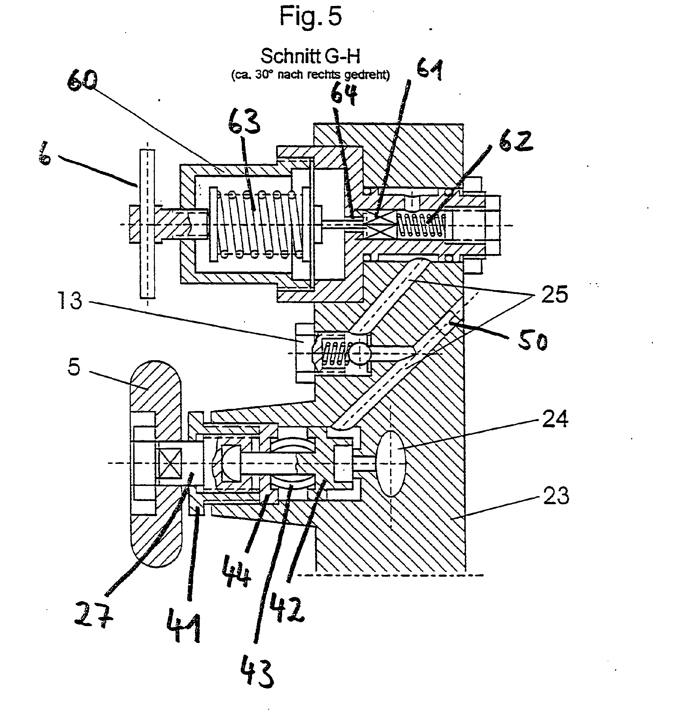

Der weitere Verlauf der Gaskanäle ist in Figur 5 dargestellt, die einen Schnitt entlang der Linie G-H der Figur 1 zeigt. In den Ventilkörper 23 ist ein Gewindeeinsatz 41 eingepaßt, in dem die mit dem Drehknopf 5 verbundene Spindel 27 in einem steilen Gewinde axial bewegbar ist. Die Spindel 27 steht mit einem Verschlußelement 42 in Wirkverbindung. Das Verschlußelement 42 wird über eine Feder 43 und einen Federteller 44 vorgespannt.

Durch entsprechende Einstellung des Drehknopfs 5 kann die Gasverbindung zwischen der zentralen Bohrung 24 und dem Hochdruckverbindungskanal 25 freigegeben oder unterbrochen werden. Das Umschalten von Schließen auf Öffnen und umgekehrt wird durch eine Drehung des Drehknopfs 5 um weniger als 150° erreicht. Der Drehknopf 5 rastet hierbei in den jeweiligen Endpositionen ein.

Der Hochdruckverbindungskanal 25 besteht aus zwei schräg verlaufenden Teilkanälen, die über ein winklig zu diesen Kanälen 25 verlaufenden Kanal mit einem Restdruckventil 13 verbunden sind. Der erste Teilkanal 25 wird durch einen Verschlußstopfen 50 gegen die Atmosphäre verschlossen. Das Restdruckventil 13 gibt die Verbindung zwischen den beiden Teilkanälen 25 frei, sofern der an ihm anstehende Druck einen vorgegebenen Minimaldruck übersteigt.

An den Hochdruckverbindungskanal 25 schließt sich ein ebenfalls in den Ventilkörper 23 eingeschraubter Druckminderer 60 an. Ein Verschlußelement 61 wird von dem Druck des über Kanal 25 einströmenden Hochdruckgases und der Federkraft zweier Federn 62, 63 beaufschlagt. Durch Drehen an dem Einstellknopf 6 kann die Federvorspannung 63 variiert werden und der Druck des durch den von dem Verschlußelement 61 freigegebenen Kanal 64 strömenden Gases und somit der Druck des dem Verbraucher zugeführten Gases eingestellt werden.

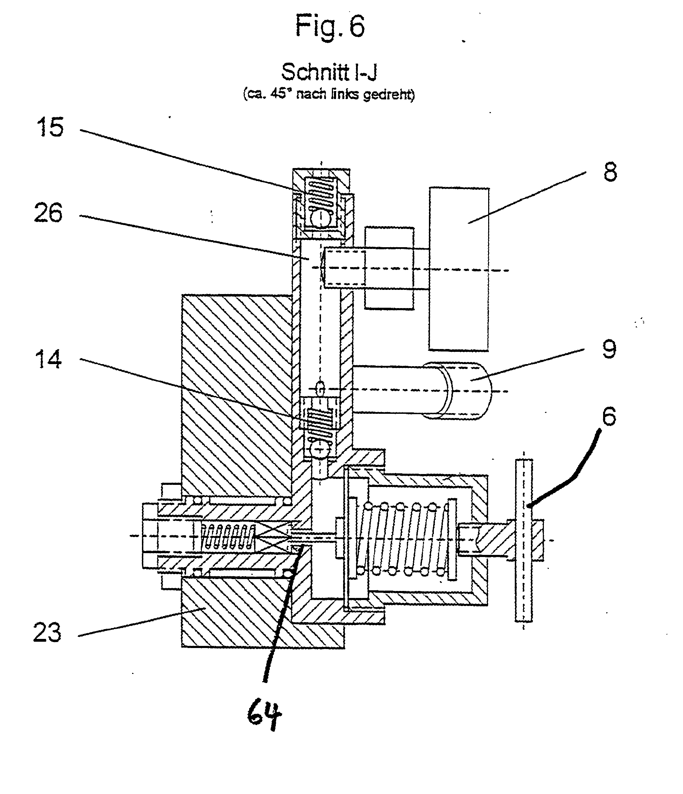

Der Niederdruckteil des Gasversorgungssystems ist in Figur 6 zu sehen. In dem Niederdruckverbindungskanal 26 befindet sich eine Gasrücktrittssicherung 14. Stromabwärts dieser Sicherung 14 zweigt zum einen der Gasentnahmeanschluß 9, an den der Verbraucher angeschlossen werden kann, und eine Zuleitung zu einem Manometer 8 für den Verbrauchsdruck ab. Der Niederdruckverbindungskanal 26 ist über ein Abblaseventil 15 gegen unvorhergesehenen Druckanstieg abgesichert.

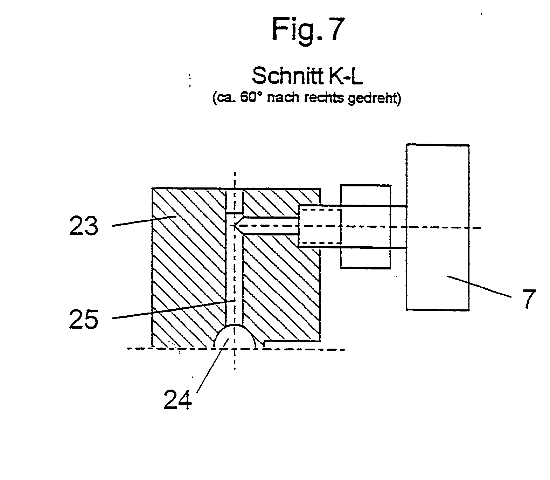

Schließlich zeigt Figur 7, die einen Schnitt in Figur 3 entlang der Linie K-L repräsentiert, das Manometer 7 für den Flaschendruck. Das Manometer 7 ist über einen Hochdruckverbindungskanal 25, der in den Ventilkörper 23 gebohrt ist, mit der zentralen Bohrung 24 verbunden.

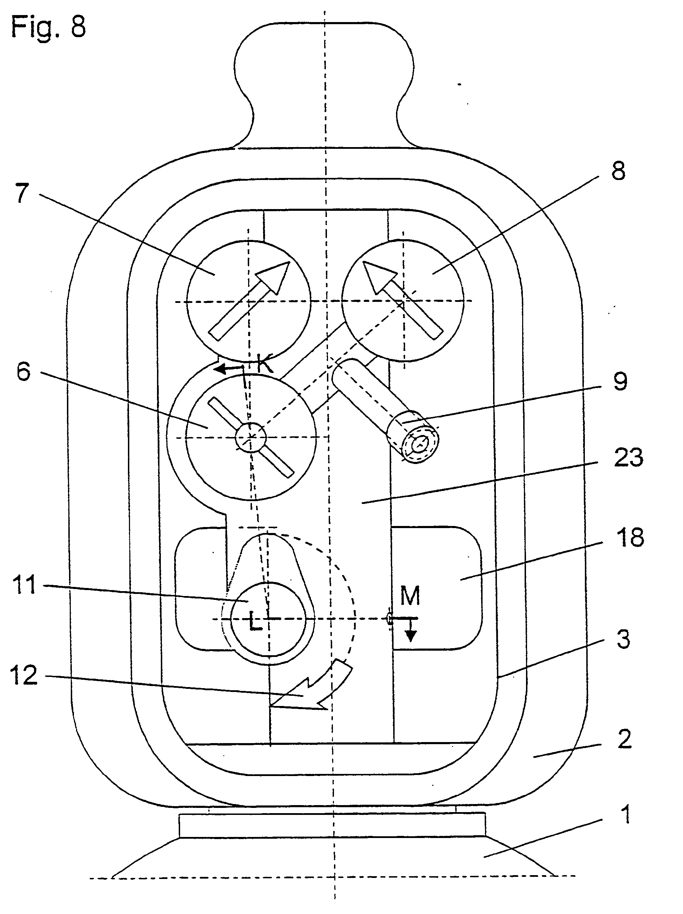

In Figur 8 ist eine bevorzugte Ausführungsform der Erfindung dargestellt. In die Flaschenverschlußeinrichtung ist in diesem Fall eine Vorrichtung 11 zur Druckvorminderung integriert. Das Gesamtsystem erhält damit eine zweistufige Druckregelung, wodurch der Verbrauchsdruck genauer geregelt werden kann. Der Einfluß des momentanen Flaschendrucks auf den geregelten Verbrauchsdruck ist geringer.

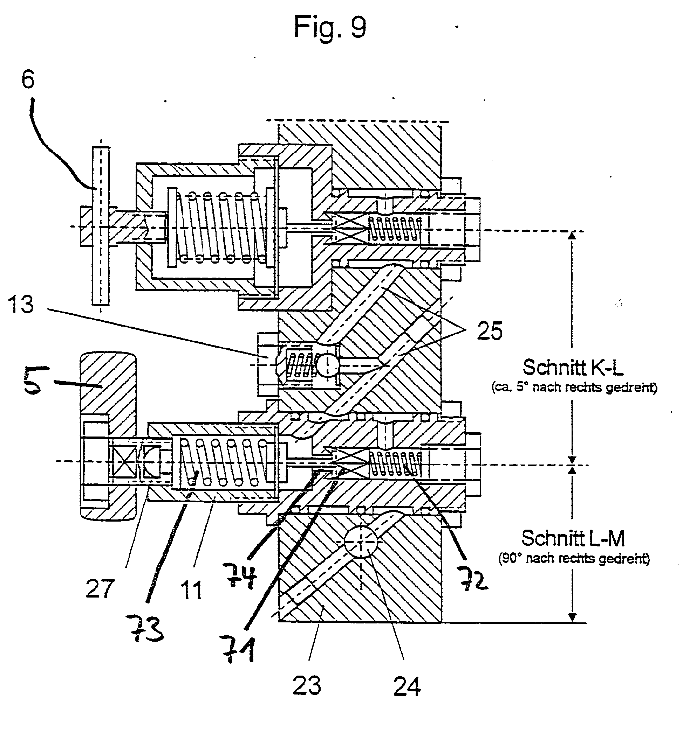

Die Flaschenverschlußeinrichtung 11 ist in Figur 9 im Detail dargestellt. Figur 9 zeigt einen Schnitt entlang der Linie K-L-M in Figur 8. Das Betätigungselement 5 ist als Hebel ausgeführt. Durch Umlegen des Hebels 5 um einen Winkel 12 von 180° wird die Verschlußeinrichtung 11 von der geöffneten in die geschlossene Position gebracht. Die Verschlußeinrichtung 11 ist über einen schrägen Verbindungskanal an die zentrale Bohrung 24 gasseitig angeschlossen.

Die Verschlußeinrichtung 11 entspricht in wesentlichen Teilen dem anhand der Figuren 5 und 6 beschriebenen Druckminderer 60. Ein Verschlußelement 71 wird im geöffneten Zustand von dem Druck des über Kanal 24 aus der Gasflasche einströmenden Hochdruckgases und der Federkraft zweier Federn 72, 73 beaufschlagt. Die Federvorspannungen sind so eingestellt, daß der Gasdruck in der Flasche von 200 oder 300 bar auf etwa 30 bar abgesenkt wird.

Durch Umlegen des Hebels 5 in die Position "Schließen" wird das Verschlußelement 71 so verschoben, daß der Kanal 74 verschlossen ist. In der Position "Öffnen" gibt das Verschlußelement 71 dagegen einen gewissen Querschnitt des Kanals 74 frei, wodurch der Gasdruck, wie oben erläutert, entsprechend abgesenkt werden kann. Der Hebel 5 erlaubt somit das Umschalten zwischen den Funktionen "Schließen der Flasche" und "Öffnen der Flasche mit erster Druckreduzierung".

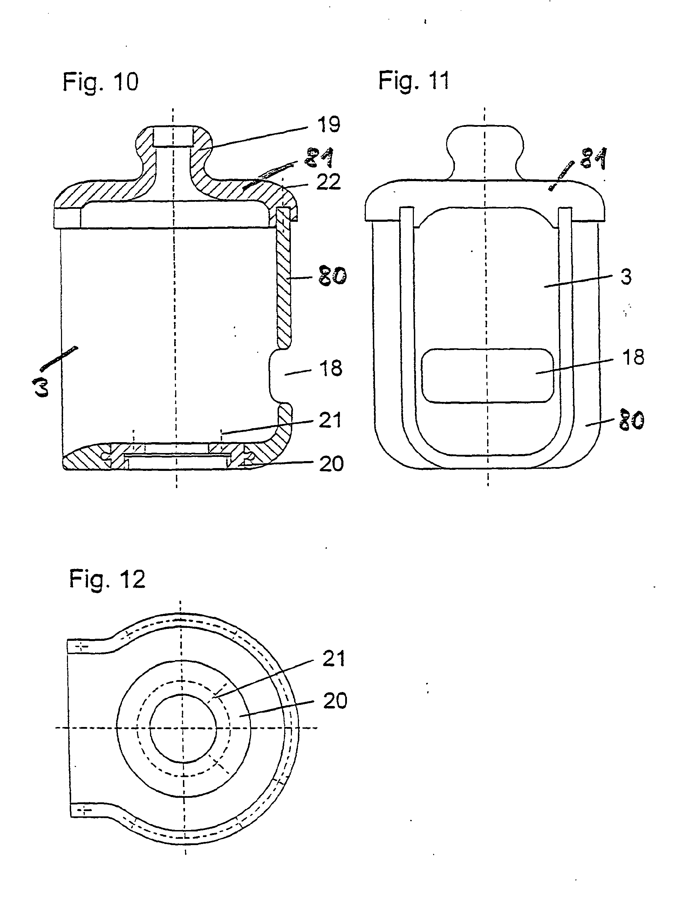

In den Figuren 10 bis 12 ist eine vorteilhafte Ausführungsform der Schutzkappe 2 in verschiedenen Ansichten gezeigt. Die Schutzkappe 2 ist im wesentlichen zylindrisch ausgeführt und besteht aus zwei Teilen: einem Unterteil 80 sowie einem Deckel 81. Die beiden Teile 80, 81 sind so ausgeführt, daß sie nach oben bzw. unten keine Hinterschneidungen aufweisen. Auf diese Weise sind die Schutzkappenteile 80, 81 leicht, beispielsweise durch Spritzgießen, aus Kunststoff herstellbar.

In das Unterteil 80 wird während des Herstellungsprozesses ein metallisches Verstärkungsteil 20 eingearbeitet, in der Regel eingegossen. Mittels dieses Verstärkungsteils wird das Unterteil 80 auf das Flaschenhalsgewinde der Gasflasche aufgeschraubt. Das Unterteil 80 besitzt auf der einen Seite eine Zugangsöffnung 3, die ausgehend von der Mittelachse des Unterteils 80 einen Öffnungswinkel von 120° besitzt. Gegenüber der Zugangsöffnung 3 ist eine weitere Aussparung 18 vorgesehen, die als Tragegriff dienen kann.

Der Deckel 81 ist mittels Befestigungsschrauben 22 mit dem Unterteil 80 verbunden. Zum Tragen, Halten oder Transportieren ist oben am Deckel 81 ein Knauf 19 angebracht.

## Patentansprüche

1. Gasflaschenarmatur mit für den Benutzer vorgesehenen Bedien- und Anzeigeelementen, die zumindest ein Betätigungselement für eine Flaschenverschlußeinrichtung, einen Einstellknopf für einen Druckminderer und einen Gasentnahmeanschluß umfassen, wobei alle für den Benutzer vorgesehenen Bedien- und Anzeigeelemente (5, 6, 7, 8, 9) innerhalb eines zylindrischen Sektors (4) angeordnet sind, **dadurch gekennzeichnet, daß** die Zylinderachse des zylindrischen Sektors (4) in der Flaschenachse liegt und dass dessen Öffnungswinkel nicht mehr als 150°, bevorzugt nicht mehr als 120°, besonders bevorzugt nicht mehr als 90°, beträgt und dass ein Füllanschluß (10) zum Füllen der Gasflasche vorgesehen ist, wobei die Anschlußöffnung des Füllanschlusses (10) in einer Ebene senkrecht zur Flaschenachse liegt.

2. Gasflaschenarmatur nach Anspruch 1, **dadurch gekennzeichnet, daß** die Bedien-und Anzeigeelemente eine Druckanzeigevorrichtung (7) für den Flaschendruck und eine Druckanzeigevorrichtung (8) für den Verbrauchsdruck umfassen.

3. Gasflaschenarmatur nach einem der Ansprüche 1 oder 2, **dadurch gekennzeichnet, daß** in die Flaschenverschlußeinrichtung (11) eine Vorrichtung zur Druckminderung integriert ist.

4. Gasflaschenarmatur nach Anspruch 3, **dadurch gekennzeichnet, daß** eine Vorrichtung zur Druckminderung auf 10 bis 40 bar, bevorzugt auf 20 bis 30 bar, vorgesehen ist.

5. Gasflaschenarmatur nach einem der Ansprüche 1 bis 4, **dadurch gekennzeichnet, daß** der Betätigungswinkel (12) des Betätigungselementes (5) der Flaschenverschlußeinrichtung (11, 40) nicht mehr als 270°, bevorzugt nicht mehr als 180°, besonders bevorzugt nicht mehr als 150° beträgt.

6. Gasflaschenarmatur nach einem der Ansprüche 1 bis 5, **dadurch gekennzeichnet, daß** das Betätigungselement (5) der Flaschenverschlußeinrichtung (11, 40) in seinen Endpositionen einrastet.

7. Gasflaschenarmatur nach einem der Ansprüche 1 bis 6, **dadurch gekennzeichnet, daß** das Betätigungselement (5) der Flaschenverschlußeinrichtung (40) als Drehknopf ausgebildet ist.

8. Gasflasche mit einer Gasflaschenarmatur nach einem der Ansprüche 1 bis 7, **dadurch gekennzeichnet, daß** eine Schutzkappe (2) für die Gasflaschenarmatur vorgesehen ist, die zumindest eine, vorzugsweise genau eine Zugangsöffnung (3) für die für den Verbraucher vorgesehenen Bedien- und Anzeigeelemente (5, 6, 7, 8, 9) besitzt.

9. Gasflasche nach Anspruch 8, **dadurch gekennzeichnet, daß** die Schutzkappe (2) nach oben geschlossen ist und/oder am Boden eine Abflußöffnung aufweist.

10. Gasflasche nach einem der Ansprüche 8 oder 9, **dadurch gekennzeichnet, daß** die Schutzkappe (2) aus einem Unter- (80) und einem Oberteil (81) besteht, wobei das Unterteil (80) nach oben und das Oberteil (81) nach unten keine Hinterschneidung aufweisen.

11. Gasflasche nach einem der Ansprüche 8 bis 10, **dadurch gekennzeichnet, daß** die Schutzkappe (2) eine als Tragegriff geeignete Aussparung (18) und/oder das Oberteil (81) der Schutzkappe (2) einen Knauf (19) besitzt.

## Claims

1. Gas-cylinder fitting having operating and display elements which are provided for the user and comprise at least one actuating element for a cylinder closure device, an adjusting knob for a pressure-reducing regulator and a gas removal connection, with all of the operating and display elements (5, 6, 7, 8, 9) provided for the user being arranged within a cylindrical sector (4), **characterized in that** the axis of the cylindrical sector (4) is situated in the axis of the cylinder, and **in that** its opening angle is not more than 150°, preferably not more than 120°, particularly preferably not more than 90°, and **in that** a filling connection (10) is provided for filling the gas cylinder, the connecting opening of the filling connection (10) being situated in a plane perpendicular with respect to the axis of the cylinder.

2. Gas-cylinder fitting according to Claim 1, **characterized in that** the operating and display elements comprise a pressure display device (7) for the cylinder pressure and a pressure display device (8) for the supply pressure.

3. Gas-cylinder fitting according to either of Claims 1 and 2, **characterized in that** a device for reducing pressure is integrated in the cylinder closure device (11).

4. Gas-cylinder fitting according to Claim 3, **characterized in that** a device for reducing the pressure to 10 to 40 bar, preferably to 20 to 30 bar, is provided.

5. Gas-cylinder fitting according to one of Claims 1 to 4, **characterized in that** the actuating angle (12) of the actuating element (5) of the cylinder closure device (11, 40) is no more than 270°, preferably no more than 180°, particularly preferably no more than 150°.

6. Gas-cylinder fitting according to one of Claims 1 to 5, **characterized in that** the actuating element (5) of the cylinder closure device (11, 40) latches into its end positions.

7. Gas-cylinder fitting according to one of Claims 1 to 6, **characterized in that** the actuating element (5) of the cylinder closure device (40) is designed as a rotary knob.

8. Gas cylinder with a gas-cylinder fitting according to one of Claims 1 to 7, **characterized in that** a protective cap (2) is provided for the gas-cylinder fitting, which cap has at least one, preferably just one, access opening (3) for the operating and display elements (5, 6, 7, 8, 9) provided for the user.

9. Gas cylinder according to Claim 8, **characterized in that** the protective cap (2) is closed upwards and/or has a discharge opening on the base.

10. Gas cylinder according to either of Claims 8 and 9, **characterized in that** the protective cap (2) comprises a lower part (80) and an upper part (81), the lower part (80) having no undercut upwards and the upper part (81) having no undercut downwards.

11. Gas cylinder according to one of Claims 8 to 10, **characterized in that** the protective cap (2) has a cutout (18) suitable as a carrying handle and/or the upper part (81) of the protective cap (2) has a knob (19).

## Revendications

1. Robinetterie de bouteille à gaz, comportant des éléments de commande et d'affichage prévus pour l'utilisateur, qui comprennent au moins un organe d'actionnement pour un dispositif de fermeture de la bouteille, une tête de réglage pour un réducteur de pression et un raccord de prélèvement de gaz, dans laquelle tous les éléments de commande et d'affichage prévus pour l'utilisateur (5, 6, 7, 8, 9) sont disposés à l'intérieur d'un secteur cylindrique (4), **caractérisée en ce que** l'axe du cylindre du secteur cylindrique (4) est situé sur l'axe de la bouteille et **en ce que** son angle d'ouverture ne vaut pas plus de 150°, de préférence pas plus de 120°, et de préférence encore pas plus de 90°, et **en ce qu'**il est prévu un raccord de remplissage (10) pour le remplissage de la bouteille à gaz, dans laquelle l'ouverture de raccordement du raccord de remplissage (10) se trouve dans un plan perpendiculaire à l'axe de la bouteille.

2. Robinetterie de bouteille à gaz selon la revendication 1, **caractérisée en ce que** les éléments de commande et d'affichage comprennent un dispositif d'affichage de la pression (7) pour la pression de la bouteille et un dispositif d'affichage de la pression (8) pour la pression d'utilisation.

3. Robinetterie de bouteille à gaz selon l'une des revendications 1 ou 2, **caractérisée en ce qu'**un dispositif de réduction de la pression est intégré dans le dispositif de fermeture de la bouteille (11).

4. Robinetterie de bouteille à gaz selon la revendication 3, **caractérisée en ce qu'**il est prévu un dispositif de réduction de la pression à 10 à 40 bars, de préférence à 20 à 30 bars.

5. Robinetterie de bouteille à gaz selon l'une quelconque des revendications 1 à 4, **caractérisée en ce que** l'angle d'actionnement (12) de l'organe d'actionnement (5) du dispositif de fermeture de la bouteille (11, 40) ne vaut pas plus de 270°, de préférence pas plus de 180°, et de préférence encore pas plus de 150°.

6. Robinetterie de bouteille à gaz selon l'une quelconque des revendications 1 à 5, **caractérisée en ce que** l'organe d'actionnement (5) du dispositif de fermeture de la bouteille (11, 40) se cale par encliquetage dans ses positions extrêmes.

7. Robinetterie de bouteille à gaz selon l'une quelconque des revendications 1 à 6, **caractérisée en ce que** l'organe d'actionnement (5) du dispositif de fermeture de la bouteille (40) est un bouton rotatif.

8. Bouteille à gaz avec une robinetterie de bouteille à gaz selon l'une quelconque des revendications 1 à 7, **caractérisée en ce qu'**il est prévu un capuchon de protection (2) pour la robinetterie de bouteille à gaz, qui présente au moins une, de préférence exactement une ouverture d'accès (3) pour les éléments de commande et d'affichage (5, 6, 7, 8, 9) prévus pour l'utilisateur.

9. Bouteille à gaz selon la revendication 8, **caractérisée en ce que** le capuchon de protection (2) est fermé vers le haut et/ou présente une ouverture d'évacuation dans le bas.

10. Bouteille à gaz selon l'une des revendications 8 ou 9, **caractérisée en ce que** le capuchon de protection (2) se compose d'une partie inférieure (80) et d'une partie supérieure (81), dans laquelle la partie inférieure (80) ne présente pas de contre-dépouille vers le haut et la partie supérieure (81) ne présente pas de contre-dépouille vers le bas.

11. Bouteille à gaz selon l'une quelconque des revendications 8 à 10, **caractérisée en ce que** le capuchon de protection (2) comporte un évidement (18) convenant comme poignée et/ou la partie supérieure (81) du capuchon de protection (2) présente un bouchon (19).
